# EUROPÄISCHE PATENTSCHRIFT

(11) **EP 2 616 284 B1**
(45) Veröffentlichungstag und Bekanntmachung des Hinweises auf die Patenterteilung: **12.08.2015**
(21) Anmeldenummer: 11782017.5
(22) Anmeldetag: 11.08.2011
(51) Int. Cl.: B60R 21/12

(54) **FAHRERSCHUTZVORRICHTUNG IN EINEM FAHRZEUG DES ÖFFENTLICHEN PERSONENTRANSPORTVERKEHRS, Z. B. EINEM BUS**
DRIVER PROTECTION DEVICE IN A PUBLIC TRANSPORTATION VEHICLE, FOR EXAMPLE, A BUS
DISPOSITIF DE PROTECTION DU CONDUCTEUR DANS UN VÉHICULE DE TRANSPORT PUBLIC, TEL QU'UN BUS

(30) Priorität: 24.05.2011 DE 202011101051 U; 22.10.2010 EP 10013875; 24.09.2010 DE 102010046465; 23.09.2010 EP 10010270; 14.09.2010 DE 102010045248
(43) Veröffentlichungstag der Anmeldung: 24.07.2013
(73) Patentinhaber: Hübner GmbH & Co. KG, 34123 Kassel (DE)
(72) Erfinder: HÜBSCH, Daniel, 34119 Kassel (DE); SPRENGER, Thorsten, 34253 Lohfelden (DE); WERNER, Martin, 37217 Witzenhausen (DE); WOLF, Heiko, 34253 Lohfelden (DE)
(74) Vertreter: Walther, Walther & Hinz GbR
(86) Internationale Anmeldenummer: PCT/DE2011/001581
(87) Internationale Veröffentlichungsnummer: WO 2012/062246

(56) Entgegenhaltungen:
- AU-A- 3 399 893
- DE-B- 1 092 327
- FR-A1- 2 878 800
- KR-A- 20100 053 863
- US-A- 4 227 735

## Beschreibung

Die vorliegende Erfindung betrifft ein Fahrzeug des öffentlichen Personentransportverkehrs, z. B. ein Bus, mit einer Fahrerschutzvorrichtung gemäß dem Oberbegriff des Anspruches 1, vgl. FR 2 878 800 A.

Insbesondere in Fahrzeugen des öffentlichen Personennahverkehrs, die nachts verkehren, sind Vorkehrungen zu treffen, um den Fahrer vor Angriffen von Fahrgästen zu schützen. Denn es hat sich gezeigt, dass nächtliche Angriffe auf die Fahrer von solchen Fahrzeugen, insbesondere Bussen, in letzter Zeit deutlich zugenommen haben.

Bekannt sind in diesem Zusammenhang sogenannte Fahrerkabinen. Hierbei wird der Fahrer vom Innenraum des Fahrzeugs, bzw. insbesondere vom Zugang des Fahrzeugs, durch eine verhältnismäßig niedrige Tür abgetrennt, die ausschwenkbar im Fahrzeug angelenkt ist. Im Bereich dieser Tür befindet sich die Kassenstation des Fahrzeugs. Diese Tür, da sie den Fahrer im sitzenden Zustand maximal bis zu den Knien reicht, bietet im Wesentlichen keinen ausreichenden Schutz vor Tätlichkeiten von Fahrgästen.

Bekannt sind darüber hinaus Vorrichtungen zum Schutz des Fahrers, die sich dadurch auszeichnen, dass in der Tür, die den Zugangsbereich des Fahrzeugs von dem Sitzplatz des Fahrers abtrennt, eine aus der Tür vertikal nach oben fahrende Scheibe, insbesondere aus Glas angeordnet ist. Eine solche Vorrichtung bietet sicherlich Schutz gegen tätliche Angriffe durch Fahrgäste, hat aber den Nachteil, dass die Vorrichtung verhältnismäßig teuer ist. Da die Türen, die den Sitzplatz des Fahrers gegenüber dem bugseitigen Zugang des Fahrzeugs abtrennen, jeweils unterschiedlich ausgebildet sind, stellt sich auch die höhenverstellbare Scheibe in der Tür als eine individuelle Lösung dar, die lediglich für einen Bustyp oder bestenfalls für die Busse eines Herstellers einsetzbar ist.

Bekannt sind darüber hinaus an der Tür angebrachte feststehende Scheiben, die den Fahrerbereich zum bugseitigen Zugang abschotten. Auch hier gilt, dass die Scheiben an die jeweilige Tür eines Fahrzeugs oder an die Türen eines Busherstellers individuell angepasst werden müssen. Bekannt sind solche Türen z. B. aus der KR 10-2010-0053863 A, der AU 33998 A und der US 4 227 735 A.

Es gibt darüber hinaus auch weitere Nachrüstlösungen, um vorhandene Türen mit entsprechende Scheiben oberhalb der Tür auszurüsten, allerdings gilt auch hier - wie bereits zuvor erwähnt - dass jeweils eine individuelle Anpassung an die konstruktiven oder räumlichen Gegebenheiten erfolgen muss.

Es hat sich herausgestellt, dass obwohl der Fahrer durch die bereits zuvor beschriebenen Maßnahmen in gewissem Umfang gegen tätliche Angriffe geschützt ist, der Fahrer dennoch die Möglichkeit haben muss, auch den Bus verlassen zu können, ohne dass ihm dies von angreifenden Fahrgästen verwehrt wird.

Zur Lösung der Aufgabe wird erfindungsgemäß vorgeschlagen, dass das Fahrzeug im Schwenkbereich der Tür eine Trenneinrichtung aufweist, wobei die Tür mit der Trenneinrichtung verriegelbar ist, wobei der bugseitige Ausgang bzw. Zugang vom Fahrgastraum ganz oder einseitig abtrennbar ist. Hieraus wird deutlich, dass der Fahrer bei Arretierung der Tür mit dieser Trenneinrichtung durch den bugseitigen Zugang das Fahrzeug verlassen kann, ohne dass ihm Fahrgäste aus dem Fahrgastbereich des Fahrzeugs unmittelbar folgen können. Der bugseitige Zugang des Fahrzeugs kann hierbei durch eine Trenneinrichtung in Form eines Trennelements in einen Gang für die einsteigenden und einen Gang für die aussteigenden Passagiere unterteilt sein. Darüber hinaus kann sich unter Bildung eines Durchgangs in dem Fahrgastinnenraum gegenüberliegend zur Rückwand eine weitere Trennwand befinden, die den Zugang vom Fahrgastraum abtrennt. Das heißt bei Verriegelung der Tür mit der Trenneinrichtung, sei es das Trennelement im bugseitigen Zugangsbereich des Fahrzeugs oder die bereits zuvor erwähnte Trennwand, die gegenüberliegend zu der Rückwand hinter dem Fahrer im Bugbereich des Busses angeordnet ist, ist das Verlassen des Busses für den Fahrer möglich, ohne dass ihm Fahrgäste folgen können.

Vorteilhafte Merkmale und Ausgestaltungen der Erfindung ergeben sich aus den Unteransprüchen.

Im Einzelnen ist in diesem Zusammenhang vorgesehen, dass die Tür durch ein Schloss mit der Trenneinrichtung verriegelbar ist, wobei das Schloss ausschließlich bugseitig in Offenstellung bringbar ist. Hieraus wird deutlich, dass nur der Fahrer bugseitig die Tür öffnen kann, um somit den bugseitigen Zugang in das Innere des Fahrzeugs zu ermöglichen.

Es wurde bereits darauf hingewiesen, dass die Tür, die den Fahrerplatz vom Zugang abtrennt, verhältnismäßig niedrig ist. Das heißt, es besteht durchaus die Möglichkeit für Fahrgäste, auch wenn dies mit einem gewissen Aufwand verbunden ist, die Tür zu übersteigen. Um dies zu verhindern, ist oberhalb der Tür ein Glaselement vorgesehen, wobei das Glaselement ebenso wie die Tür ausschwenkbar ist, wobei das Glaselement auch von der Tür getrennt verschwenkbar an der Rückwand angeordnet sein kann, um dem Fahrer die Option zu geben, sich vollständig oder lediglich durch die Tür nur teilweise von dem Fahrgastraum abzuschotten. Das Glaselement ist hierbei in der abschottenden Stellung z. B. durch die Tür feststellbar aufnehmbar. Wenn das Glaselement somit bis an die Decke oder nahezu an die Decke des Fahrzeugs ragt, wird hierdurch sicher verhindert, dass Fahrgäste den Busfahrer beim Verlassen des Busses folgen können. Auch hier ist insofern vorgesehen, dass das Glaselement, einen Glasabschnitt aufweist, der relativ zum Glaselement beweglich, und hier insbesondere entsprechend der Breite der Tür verschieblich, an dem Glaselement angeordnet ist. Denkbar ist allerdings auch, dass der Glasabschnitt relativ zur Tür beweglich durch die Tür aufnehmbar ist. Das heißt, dass der Glasabschnitt B. vertikal verschieblich durch die Tür aufnehmbar ist. Somit kann zur Abschottung des Fahrers der Glasabschnitt nach oben aus der Tür herausgefahren werden, wobei zur Führung des Glasabschnitts eine am Glaselement angeordnete Schiene vorgesehen sein kann. Gegenstand der Erfindung ist auch, wenn der Glasabschnitt verschwenkbar an dem Glaselement angelenkt ist.

Insbesondere ist nach einen weiteren Ausgestaltung der Erfindung vorgesehen, dass der Glasabschnitt in vertikaler Richtung unter Bildung eines Freiraums oder Ausschnitts einen Abstand zur Oberkante der Tür aufweist, um die Möglichkeit der Kommunikation zwischen Fahrer und Fahrgast und die Herausgabe von Billetts zu ermöglichen. Diese Möglichkeit besteht sowohl bei einer Tür, bei der der Glasabschnitt vertikal verschieblich durch die Tür aufgenommen ist, als auch bei einem horizontal relativ zum Glaselement verschieblichen Glasabschnitt, oder auch bei einem verschwenkbar an dem Glaselement angebrachten Glasabschnitt.

Im Einzelnen ist in Bezug auf die horizontale als auch die vertikale Verschieblichkeit des Glasabschnitts gegenüber dem Glaselement, dass der Glasabschnitt gegenüber dem Glaselement in der ausgefahrenen Stellung festlegbar ist. Die Verbindung zwischen dem Glaselement einerseits und dem Glasabschnitt andererseits erfolgt durch mindestens eine, vorzugsweise jedoch zwei beabstandet zueinander angeordnete Linearführungen. Die Festlegung des Glasabschnittes relativ zum Glaselement in der ausgefahrenen Position kann nun in einfacher Weise dadurch bewerkstelligt werden, dass in ausgefahrener Position der Linearführung eine die Schienen der Linearführung durchragende Bohrung vorgesehen ist, in die ein Stift einsteckbar ist. Denkbar ist ebenfalls die Verspannung der beiden Teleskopelemente der Linearführung gegeneinander durch einen Spannhebel.

Ähnlich kann auch die Feststellung des Glasabschnitts erfolgen, wenn dieser ausschwenkbar an dem Glasabschnitt angeordnet ist; das freie Ende des ausschwenkbaren Glasabschnitts kann in der ausgeschwenkten Position z. B. durch in die Oberkante der Tür einsteckbare Stifte blockiert werden. Bei der vertikalen Verschiebbarkeit des Glasabschnitts kann der Glasabschnitt ebenfalls durch in die Tür einsetzbare Stifte arretiert werden, die unter den Glasabschnitt ragen.

Eine Ausführungsform der Erfindung beschäftigt sich damit, das Glaselement parallel zur Tür zu verschwenken. D. h., das Glaselement ist durch eine horizontal verlaufende Achse mit der Tür verbunden. Vorgesehen kann hierbei sein, in der Tür auf der oberen Stirnseite eine Ausnehmung für das Glaselement vorzusehen, oder aber das Glaselement vor oder hinter die Tür zu verschwenken.

Ein besonders vorteilhaftes Merkmal der Erfindung zeichnet sich dadurch aus, dass die Fahrerschutzvorrichtung ein am Fahrzeug angelenktes Glasabschlusselement aufweist, das im ausgestellten Zustand des Glasabschnittes sich an diesen Glasabschnitt anschließt. Hierbei kann das Glasabschlusselement an der Bugscheibe des Fahrzeugs oder auch am Armaturenbrett oder auch sowohl am Armaturenbrett als auch an der Bugscheibe des Fahrzeugs angebracht sein. Der Glasabschnitt oder auch das Glaselement, wenn das Glaselement als Ganzes verschwenkbar ausgebildet ist, stehen vorteilhaft mit dem Glasabschlusselement in Verbindung, insbesondere durch Schienen an der Längskante des Glasabschlusselements bzw. des Glasabschnittes.

Anhand der Zeichnungen wird die Erfindung nachstehend beispielhaft näher erläutert.
- Fig. 1: zeigt eine Seitenansicht auf den Platz des Fahrers mit der Tür;
- Fig. 2: zeigt eine Ansicht gemäß Fig. 1, wobei das Glaselement erkennbar ist;
- Fig. 3: zeigt eine Darstellung gemäß Fig. 1, wobei der Glasabschnitt durch zwei Linearführungen mit dem Glaselement verbunden ist;
- Fig. 3a: zeigt schematisch die Festlegung des Glasabschnittes in ausgefahrener Position zum Glaselement durch einen Stift;
- Fig. 4: zeigt eine Darstellung gemäß Fig. 3, wobei an der Bugscheibe des Fahrzeugs ein Glasabschlusselement angeordnet ist, an das der Glasabschnitt des Glaselementes anschließt;
- Fig. 5: zeigt eine Ansführungsfoorm gemäß der Erfindung in eine perspektivischen Darstellung auf die Fahrerschutzkabine von oben, wobei die Tür einschließlich des Glaselementes ausgeschwenkt mit dem Trennelement im Zugangsbereich des Busses verbunden ist;
- Fig. 6: zeigt eine Ansicht gemäß Fig. 5, wobei jedoch die Tür einschließlich des Glaselementes an der zweiten Wand des Busses anliegt, um den Zugangsbereich des Busses gegenüber dem übrigen Fahrgastraum vollständig abzuschirmen;
- Fig. 7: zeigt schematisch ein Schloss zur Verriegelung der Tür und gegebenenfalls des Glasabschnittes mit der Trenneinrichtung;
- Fig. 8: zeigt schematisch eine Tür mit einem relativ zur Tür verschwenkbaren Glaselement;
- Fig. 9: zeigt eine Ausführungsform, bei der die Tür einen Glasabschnitt vertikal verschieblich aufnimmt;
- Fig. 10: zeigt eine Ausführungsform, bei der der Glasabschnitt um ein vertikales Scharnier verschwenkbar an dem Glaselement angeordnet ist.
- Fig. 11: zeigt eine Ausführungsform, bei der ein Glaselement parallel zur Tür verschwenkbar ist;
- Fig. 12: zeigt eine Ausnehmung in der Tür zur Aufnahme des Glaselements gemäß Fig. 11;
- Fig. 13: zeigt eine Variante zu Fig. 12, bei der das Glaselement parallel und seitlich zur Tür verschwenkbar ist.

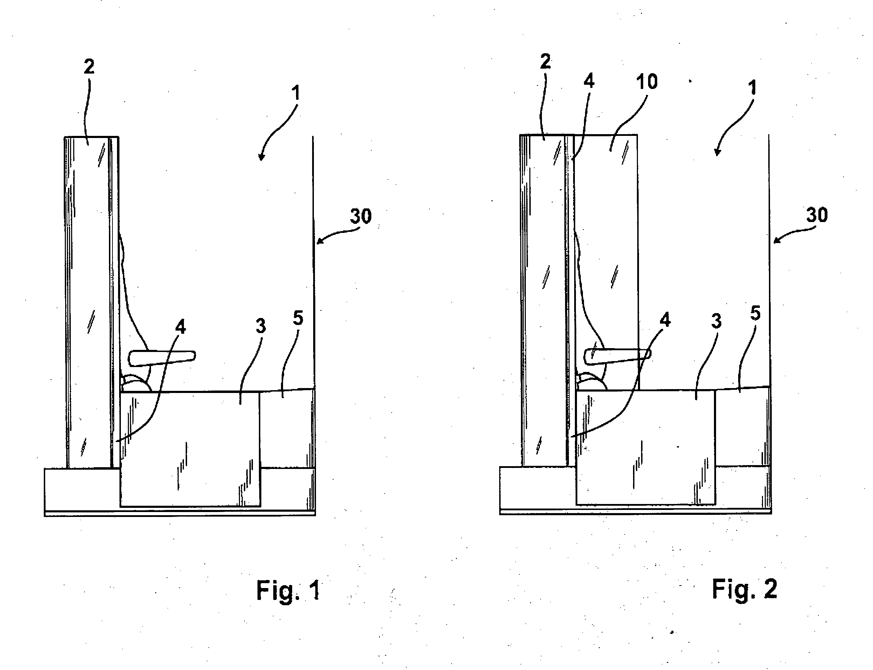

Die Darstellung gemäß Fig. 1 zeigt die Fahrerschutzvorrichtung 1 mit der Rückwand 2 und der Tür 3, wobei die Tür über ein Scharnierelement 4 mit der Rückwand schwenkbar verbunden ist. Zum Bugbereich hin an die Tür anschließend befindet sich das Armaturenbrett 5, das beispielsweise die Kasse aufnimmt.

Die Darstellung gemäß Fig. 2 unterscheidet sich von der Darstellung gemäß Fig. 1 insofern, als an dem Scharnierelement 4 zusätzlich das Glaselement 10 angelenkt ist, wobei das Glaselement 10 mit der Tür 3 fest verbunden sein kann, sodass sowohl das Glaselement als auch die Tür im gekoppelten Zustand zusammen ausschwenkbar sind.

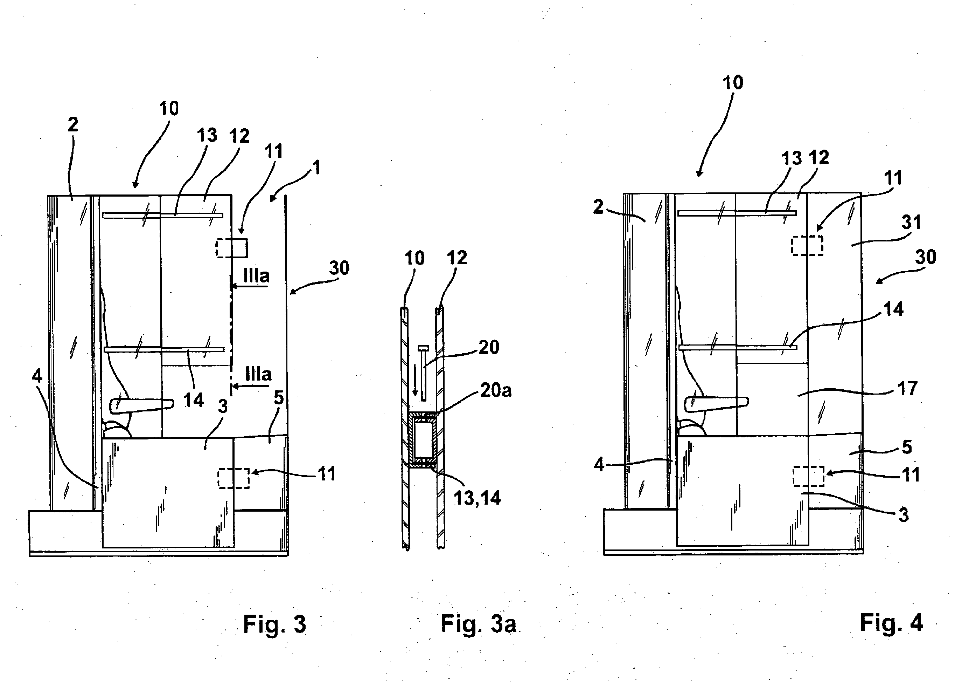

Bei der Darstellung gemäß Fig. 3 umfasst das Glaselement 10 einen Glasabschnitt 12, wobei das Glaselement, wie bereits erläutert, durch das vertikale Scharnierelement 4 an der Rückwand 2 der Fahrerschutzvorrichtung angelenkt ist. Das Scharnierelement 4 kann durchgängig oder geteilt ausgebildet sein, sodass die Tür und das Glaselement gemeinsam oder getrennt verschwenkbar sind. Der Glasabschnitt 12 steht durch zwei Linearführungen 13, 14 mit dem Glaselement 10 in Verbindung, wobei durch die Linearführungen der Abschnitt 12 relativ zum ersten Glaselement 10 hinter dieses verschieblich ist. Fig. 3a zeigt in diesem Zusammenhang, wie die Linearführung 13, 14 im ausgefahrenen Zustand des Abschnitts 12 feststellbar ist, um das Verschieben des Abschnittes 12 relativ zum Glaselement 10 zu unterbinden. In diesem Zusammenhang ist ein Stift 20 vorgesehen, der von der Innenseite der Fahrerschutzkabine durch den Fahrer in eine die Schienen der Linearführung durchragende Bohrung 20a einsteckbar ist.

Bei der Darstellung gemäß Fig. 4 ist im Unterschied zu der Darstellung gemäß Fig. 3 an der Bugscheibe 30 des Fahrzeugs ein Glasabschlusselement 31 vorgesehen, das sich im ausgefahrenen Zustand dem Abschnitt 12 anschließt, sodass der Zugangsbereich zum Sitz des Fahrers im Wesentlichen vollflächig abgetrennt ist. In diesem Zusammenhang ist darauf hinzuweisen, dass der Glasabschnitt 12 des Glaselementes einen Abstand zur Oberkante der Tür aufweist, wobei sich hierdurch ein Freiraum 17 ergibt, der als Durchreiche zum Verkauf von Fahrscheinen und zur Kommunikation mit den Fahrgästen dient.

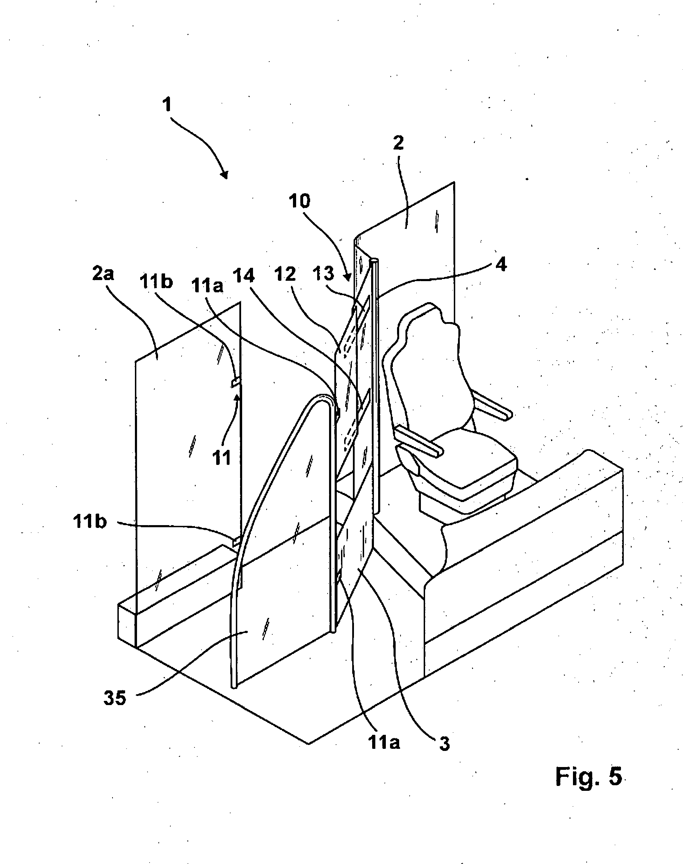

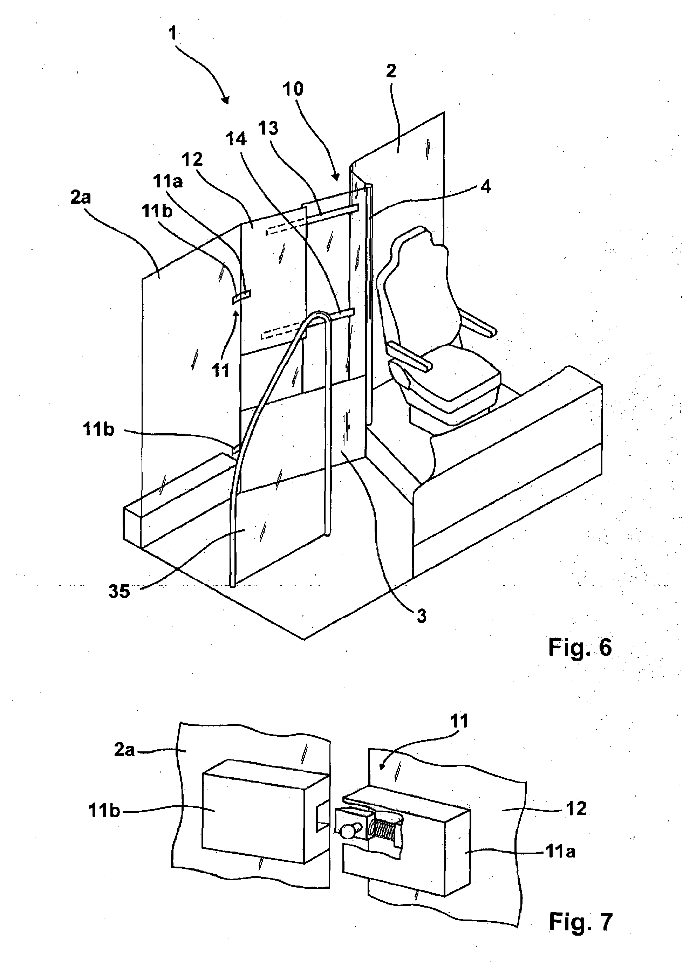

Aus den Darstellungen gemäß den Fig. 5 und 6 ist erkennbar, wie in ausgeschwenkter Position sowohl der Tür 3 als auch des Glasabschnitts 12 bei Anlage an dem Trennelement 35 im Zugangsbereich des Busses der Zugang zumindest einseitig von dem übrigen Fahrgastraum abgetrennt werden kann. Hierbei ist insbesondere vorgesehen, dass sowohl der Glasabschnitt 12 als auch die Tür 3 mit dem Trennelement 35, beispielsweise durch ein Schloss 11 mit Falle und Riegel 11 a, 11 b verriegelt sein können, um die Tür 3 einschließlich des Glasabschnitts 12 jeweils durch ein gesondertes Schloss 11 festzustellen.

Eine ähnliche Ausbildung ergibt sich aus Fig. 6 insofern, als dort eine weitere zweite Trennwand 2a vorgesehen ist, die parallel aber unter Bildung eines Durchgangs zum Fahrgastraum beabstandet zu der Rückwand 2 verläuft, und mit der in gleicher Weise wie mit dem Trennelement 35 die Tür 3 einschließlich des Glaselementes 10 auf dem Glasabschnitt 12 verriegelt werden kann. Hierbei ist dann der gesamte Fahrgastraum von dem Fahrer abgeschirmt, d. h., der Fahrer hat die Möglichkeit, über die Vordertür das Fahrzeug zu verlassen. Das Öffnen des Schlosses der Tür und/oder des Glasabschnittes ist ausschließlich von der Bugseite des Fahrzeugs her möglich. Das heißt, die Schlösser 11 für die Tür und für den Glasabschnitt zur Verbindung jeweils mit der Trennwand 2a oder dem Trennelement 35 sind nur bugseitig zu öffnen.

Vorteilhaft ist weiterhin, wenn der Glasabschnitt 12 ebenfalls mit dem Glasabschlusselement durch das Schloss 11 verriegelbar ist, da hierdurch die gesamte Glaskonstruktion eine erhöhte Steifigkeit erreicht und hierdurch auch die Sicherheit erhöht wird.

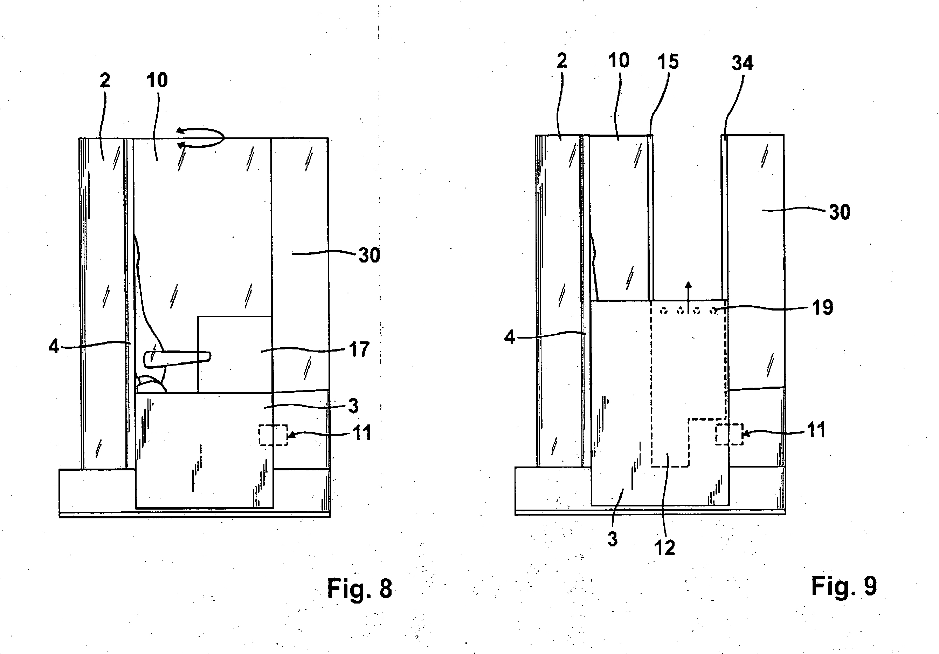

Bei der Ausführungsform gemäß Fig. 8 ist vorgesehen, dass das Glaselement 10 sich insgesamt über die gesamte Breite der Tür 3 erstreckt, und das Glaselement darüber hinaus durch ein Scharnier an der Rückwand 2 befestigt ist, und das Glaselement somit horizontal verschwenkbar ist, entweder zusammen mit der Tür oder getrennt hiervon, wie dies zuvor beschrieben wurde. Das Glaselement 10 kann darüber hinaus einen Freiraum oder Ausschnitt 17 zeigen, um dem Fahrer die Kommunikation mit den Passagieren zu ermöglichen, wie dies bereits beschrieben worden ist. Das ausschwenkbare Glaselement 10 ist an der Oberkante der Tür 3 festlegbar. Die Festlegbarkeit der Verriegelung des verschwenkbaren Glaselementes 10 an der Tür kann z. B. durch Stifte erfolgen.

Fig. 9 zeigt eine Variante, bei der ein Glaselement 10 vorgesehen ist, das zusammen mit der Tür ausschwenkbar ist, wobei darüber hinaus ein Glasabschnitt 12 vorgesehen ist, der vertikal verschieblich durch die Tür 3 aufgenommen ist. Zur Fixierung des vertikal verfahrbaren Glasabschnittes 12 ist an der Seitenkante des Glaselementes 10 eine Führungsschiene 15 vorgesehen, die dem Glasabschnitt in der vertikal ausgefahrenen Stellung die erforderliche Stabilität vermittelt. Eine erhöhte Stabilität erreicht der vertikal verfahrbare Glasabschnitt dann, wenn die Bugscheibe 30 ebenfalls eine Führungsschiene 34 für den vertikal verschieblichen Glasabschnitt 12 zeigt. Gehalten wird der Glasabschnitt 12 in der ausgefahrenen Position dadurch, dass die Tür Öffnungen 19 zeigt, die horizontal verlaufend in der Tür angeordnet sind und durch die Stifte steckbar sind, um den Glasabschnitt in der vertikal ausgefahrenen Position zu halten.

Denkbar ist ebenfalls, den vertikal verstellbaren Glasabschnitt 12 durch Linearführungen in der Tür zu lagern. Die Festlegung des Glasabschnitts kann ebenfalls in der zuvor zu Fig. 3 beschriebenen Weise erfolgen.

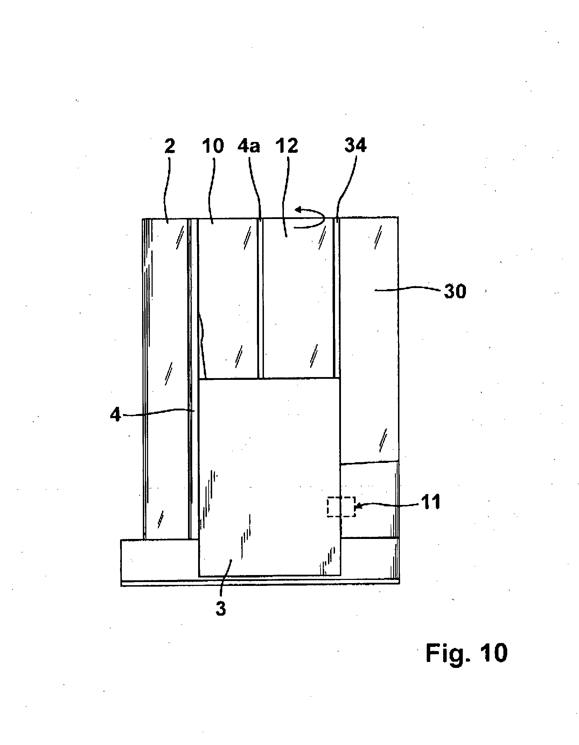

Figur 10 zeigt eine Ausführungsform, bei der der Glasabschnitt 12 horizontal verschwenkbar durch ein Scharnierelement 4a durch das Glaselement 10 aufgenommen ist. Ist demzufolge sowohl das Glaselement 10 als auch der Glasabschnitt 12 verschwenkbar, dann lassen sich der Glasabschnitt und das Glaselement aufeinander zu falten, was platzsparend ist, insbesondere gegenüber einer Ausführungsform gemäß Figur 8, bei der das Glaselement sich über die gesamte Breite der Tür erstreckt. Auch hier kann ein Ausschnitt oder Freiraum 17 vorgesehen sein.

Der verschwenkbare Glasabschnitt 12 lagert vorteilhaft in geschlossenem Zustand an der Bugscheibe 30 und ist vorteilhaft mit dieser verbunden, z. B. über horizontale Riegel.

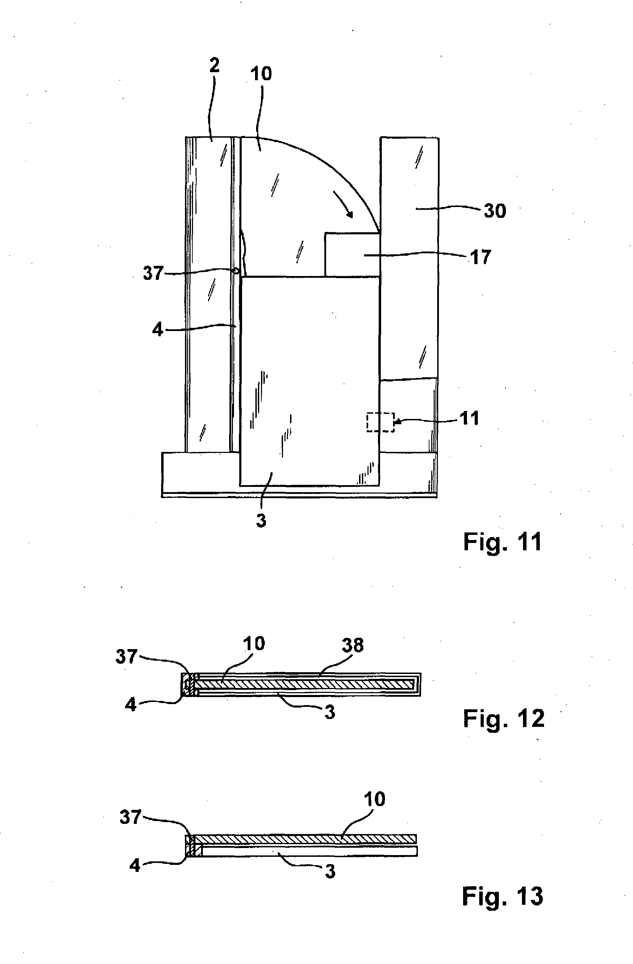

Figur 11 zeigt die Verschwenkbarkeit des Glaselements 10 um die horizontal verlaufende Achse 37. Hierbei taucht das Glaselement entweder in eine entsprechende Ausnehmung 38 in der Tür 3 ein (Fig. 12), oder aber das Glaselement 10 wird parallel zur Tür 3 verschwenkt und befindet sich in heruntergeschwenktem Zustand vor oder hinter der Tür (Fig. 13).

### Bezugszeichenliste:

- 1: Fahrerschutzvorrichtung
- 2: Rückwand
- 2a: Trennwand
- 3: Tür
- 4: Scharnierelement
- 4a: Scharnierelement
- 5: Armaturenbrett
- 10: Glaselement
- 11: Schloss
- 11a: Riegel
- 11b: Falle
- 12: Glasabschnitt
- 13, 14: Linearführungen
- 15: Führungsschiene
- 17: Freiraum
- 19: Öffnungen
- 20: Stift
- 30: Bugscheibe
- 31: Glasabschlusselement
- 34: Führungsschiene
- 35: Trennelement
- 37: Achse
- 38: Ausnehmung in der Tür für das Glaselement

## Patentansprüche

1. Fahrzeug des öffentlichen Personentransportverkehrs, z. B. ein Bus, mit einer Fahrerschutzvorrichtung umfassend eine hinter dem Fahrer angeordnete feststehende Rückwand (2) sowie eine an der Rückwand (2) angeordnete ausschwenkbare Tür (3),
**dadurch gekennzeichnet,**
**dass** das Fahrzeug im Schwenkbereich der Tür (3) eine Trenneinrichtung (35) aufweist,
wobei die Tür (3) mit der Trenneinrichtung (35) verriegelbar ist, wobei der bugseitige Zugang vom Fahrgastraum ganz oder einseitig abtrennbar ist.

2. Fahrzeug des öffentlichen Personentransportverkehrs, z. B. ein Bus, mit einer Fahrerschutzvorrichtung nach Anspruch 1,
**dadurch gekennzeichnet,**
**dass** die Trenneinrichtung ein Trennelement (35) im bugseitigen Zugangsbereich des Fahrzeugs umfasst.

3. Fahrzeug des öffentlichen Personentransportverkehrs, z. B. ein Bus, mit einer Fahrerschutzvorrichtung nach Anspruch 1,
**dadurch gekennzeichnet,**
**dass** die Trenneinrichtung eine Trennwand (2a) umfasst, die unter Bildung eines Durchgangs im Fahrgastraum des Fahrzeugs gegenüber der feststehenden Rückwand (2) im Fahrzeug angeordnet ist.

4. Fahrzeug des öffentlichen Personentransportverkehrs, z. B. ein Bus, mit einer Fahrerschutzvorrichtung nach einem der Ansprüche 1 bis 3,
**dadurch gekennzeichnet,**
**dass** die Tür (3) durch ein Schloss (11) mit der Trenneinrichtung (2a, 35) verriegelbar ist, wobei das Schloss (11) ausschließlich bugseitig in Offenstellung bringbar ist.

5. Fahrzeug des öffentlichen Personentransportverkehrs, z. B. ein Bus, mit einer Fahrerschutzvorrichtung nach einem der Ansprüche 1 bis 4,
**dadurch gekennzeichnet,**
**dass** oberhalb der Tür (3) ein Glaselement (10) vorgesehen ist, wobei das Glaselement (10) ebenso wie die Tür (3) ausschwenkbar ist.

6. Fahrzeug des öffentlichen Personentransportverkehrs, z. B. ein Bus, mit einer Fahrerschutzvorrichtung nach Anspruch 5,
**dadurch gekennzeichnet,**
**dass** das Glaselement (10) unabhängig von der Tür (3) ausschwenkbar ist.

7. Fahrzeug des öffentlichen Personentransportverkehrs, z. B. ein Bus, mit einer Fahrerschutzvorrichtung nach Anspruch 5 oder 6,
**dadurch gekennzeichnet,**
**dass** neben dem Glaselement (10) ein Glasabschnitt (12) vorgesehen ist.

8. Fahrzeug des öffentlichen Personentransportverkehrs, z. B. ein Bus, mit einer Fahrerschutzvorrichtung nach Anspruch 7,
**dadurch gekennzeichnet,**
**dass** der Glasabschnitt (12) relativ zum Glaselement (10) beweglich, insbesondere verschieblich ist.

9. Fahrzeug des öffentlichen Personentransportverkehrs, z. B. ein Bus, mit einer Fahrerschutzvorrichtung nach Anspruch 7 oder 8,
**dadurch gekennzeichnet,**
**dass** der Glasabschnitt (12) relativ zum Glaselement (10) verschieblich an dem Glaselement (10) angeordnet ist.

10. Fahrzeug des öffentlichen Persönentransportverkehrs, z. B. ein Bus, mit einer Fahrerschutzvorrichtung nach Anspruch 8 oder 9,
**dadurch gekennzeichnet,**
**dass** der Glasabschnitt (12) relativ zum Glaselement (10) verschieblich durch die Tür (3) aufgenommen ist.

11. Fahrzeug des öffentlichen Personentransportverkehrs, z. B. ein Bus, mit einer Fahrerschutzvorrichtung nach einem der Ansprüche 5 bis 10,
**dadurch gekennzeichnet,**
**dass** das Glaselement (10) durch ein Scharnierelement (4) mit der feststehenden Rückwand (2) verbunden ist.

12. Fahrzeug des öffentlichen Personentransportverkehrs, z. B. ein Bus, mit einer Fahrerschutzvorrichtung nach einem der Ansprüche 5 bis 11,
**dadurch gekennzeichnet,**
**dass** das Glaselement (10) mit der Tür (3) verbunden ist.

13. Fahrzeug des öffentlichen Personentransportverkehrs, z. B. ein Bus, mit einer Fahrerschutzvorrichtung nach Anspruch 9,
**dadurch gekennzeichnet,**
**dass** der Glasabschnitt (12) in Richtung der Breite der Tür (3) verschieblich mit dem Glaselement (10) verbunden ist.

14. Fahrzeug des öffentlichen Personentransportverkehrs, z. B. ein Bus, mit einer Fahrerschutzvorrichtung nach einem der Ansprüche 7 bis 13,
**dadurch gekennzeichnet,**
**dass** der Glasabschnitt (12) in vertikaler Richtung zur Bildung eines Freiraums (17) einen Abstand zur Oberkante der Tür (3) aufweist.

15. Fahrzeug des öffentlichen Personentransportverkehrs, z. B. ein Bus, mit einer Fahrerschutzvorrichtung nach einem der Ansprüche 7 bis 14,
**dadurch gekennzeichnet,**
**dass** der Glasabschnitt (12) gegenüber dem Glaselement (10) in der ausgefahrenen Stellung festlegbar ist.

16. Fahrzeug des öffentlichen Personentransportverkehrs, z. B. ein Bus, mit einer Fahrerschutzvorrichtung nach einem der Ansprüche 7 bis 15,
**dadurch gekennzeichnet,**
**dass** die Fahrerschutzvorrichtung ein am Fahrzeug starr angelenktes Glasabschlusselement (31) aufweist, das im ausgestellten Zustand des Glasabschnittes (12) sich an diesen Glasabschnitt (12) anschließt.

17. Fahrzeug des öffentlichen Personentransportverkehrs, z. B. ein Bus, mit einer Fahrerschutzvorrichtung nach Anspruch 16,
**dadurch gekennzeichnet,**
**dass** das Glasabschlusselement (31) an der Bugscheibe (30) des Fahrzeugs angebracht ist.

18. Fahrzeug des öffentlichen Personentransportverkehrs, z. B. ein Bus, mit einer Fahrerschutzvorrichtung nach Anspruch 16 oder 17,
**dadurch gekennzeichnet,**
**dass** das Glasabschlusselement (31) an dem Armaturenbrett (5) des Fahrzeugs angebracht ist.

19. Fahrzeug des öffentlichen Personentransportverkehrs, z. B. ein Bus, mit einer Fahrerschutzvorrichtung nach Anspruch 5,
**dadurch gekennzeichnet,**
**dass** das Glaselement (10) um eine horizontale Achse (37) parallel zur Tür (3) verschwenkbar ist, wobei die horizontale Achse (37) mit der Tür verbunden ist.

## Claims

1. A public transportation vehicle, for example a bus, with a driver protection device, comprising a fixed rear wall (2) disposed behind the driver and a swing-out door (3) disposed on the rear wall (2),
**characterized in that**
the vehicle has a partition device (35) in the pivoting range of the door (3), wherein the door (3) is lockable with the partition device (35), wherein the front-end access is separable from the passenger area, completely or on one side.

2. The public transportation vehicle, for example a bus, with a driver protection device according to claim 1,
**characterized in that**
the partition device comprises a partition element (35) in the front-end access area of the vehicle.

3. The public transportation vehicle, for example a bus, with a driver protection device according to claim 1,
**characterized in that**
the partition device comprises a partition wall (2a), which is disposed in the vehicle, opposite to the fixed rear wall (2), while forming a passage in the passenger area of the vehicle.

4. The public transportation vehicle, for example a bus, with a driver protection device according to one of the claims 1 to 3,
**characterized in that**
the door (3) is lockable with the separation device (2a, 35) by way of a lock (11), wherein the lock (11) is exclusively openable on the front-end side.

5. The public transportation vehicle, for example a bus, with a driver protection device according to one of the claims 1 to 4,
**characterized in that**
a glass element (10) is provided above the door (3), wherein the glass element (10) as well as the door (3) are adapted to be swung-out.

6. The public transportation vehicle, for example a bus, with a driver protection device according to claim 5,
**characterized in that**
the glass element (10) is adapted to be swung-out independently from the door (3).

7. The public transportation vehicle, for example a bus, with a driver protection device according to claim 5 or 6,
**characterized in that**
a glass section (12) is provided next to the glass element (10).

8. The public transportation vehicle, for example a bus, with a driver protection device according to claim 7,
**characterized in that**
the glass section (12) is movable, more specifically slidable relative to the glass element (10).

9. The public transportation vehicle, for example a bus, with a driver protection device according to claim 7 or 8,
**characterized in that**
the glass section (12) is disposed on the glass element (10) in such a manner that it is displaceable relative to the glass element (10).

10. The public transportation vehicle, for example a bus, with a driver protection device according to claim 8 or 9,
**characterized in that**
the glass section (12) is received by the door (3) in such a manner that it is displaceable relative to the glass element (10).

11. The public transportation vehicle, for example a bus, with a driver protection device according to claim 5 to 10,
**characterized in that**
the glass element (10) is connected to the fixed rear wall (2) by a hinge element (4).

12. The public transportation vehicle, for example a bus, with a driver protection device according to claim 5 to 11,
**characterized in that**
the glass element (10) is connected to the door (3).

13. The public transportation vehicle, for example a bus, with a driver protection device according to claim 9,
**characterized in that**
the glass section (12) is connected to the glass element (10) in such a manner that it is slidable in the direction of the width of the door (3).

14. The public transportation vehicle, for example a bus, with a driver protection device according to claim 7 to 13,
**characterized in that**
the glass section (12) has a gap relative to the top edge of the door (3) in the vertical direction for forming a free space (17).

15. The public transportation vehicle, for example a bus, with a driver protection device according to claim 7 to 14,
**characterized in that**
the glass section (12) is securable in the extended position relative to the glass element (10).

16. The public transportation vehicle, for example a bus, with a driver protection device according to claim 7 to 15,
**characterized in that**
the driver protection device has a glass termination element (31) rigidly coupled to the vehicle, which is adjacent to the glass section (12) in the extended state of the glass section (12).

17. The public transportation vehicle, for example a bus, with a driver protection device according to claim 16,
**characterized in that**
the glass termination element (31) is attached to the front window (30) of the vehicle.

18. The public transportation vehicle, for example a bus, with a driver protection device according to claim 16 or 17,
**characterized in that**
the glass termination element (31) is attached to the dashboard (5) of the vehicle.

19. The public transportation vehicle, for example a bus, with a driver protection device according to claim 5,
**characterized in that**
the glass element (10) is pivotable around a horizontal axis (37) parallel to the door (3), wherein the horizontal axis (37) is connected to the door.

## Revendications

1. Véhicule de transport public de personnes, par exemple un bus, équipé d'une installation de protection du conducteur,
comportant une paroi arrière rigide (2), montée derrière le conducteur ainsi qu'une porte pivotante (3) liée à la paroi arrière (2),
**caractérisé en ce que,**
le véhicule comprend une installation de séparation (35) disposée dans la zone correspondant au pivotement de la porte (3),
dans lequel la porte (3) ainsi que l'installation de séparation (35) peuvent être verrouillés, dans lequel l'accès, du côté de la partie avant, peut être entièrement isolé ou séparé partiellement d'un côté de l'espace des passagers.

2. Véhicule de transport public de personnes, par exemple un bus, équipé d'une installation de protection du conducteur, selon la revendication 1,
**caractérisé en ce que,**
l'installation de séparation comporte un élément de séparation (35) dans la partie avant du secteur d'accès du véhicule.

3. Véhicule de transport public de personnes, par exemple un bus, équipé d'une installation de protection du conducteur, selon la revendication 1,
**caractérisé en ce que,**
l'installation de séparation comporte une paroi de séparation (2a) qui est montée dans l'espace du véhicule en formant un passage dans l'espace des passagers du véhicule en face de la paroi fixe arrière (2).

4. Véhicule de transport public de personnes, par exemple un bus, équipé d'une installation de protection du conducteur, selon une des revendications 1 à 3,
**caractérisé en ce que,**
la porte (3) est verrouillée avec l'installation de séparation (2a, 35) au moyen d'une serrure (11), dans lequel la serrure (11) ne peut être amenée en position ouverte que vers l'avant.

5. Véhicule de transport public de personnes, par exemple un bus, équipé d'une installation de protection du conducteur, selon une des revendications 1 à 4,
**caractérisé en ce que,**
un élément en verre (10) est prévu au-dessus de la porte (3), dans lequel l'élément en verre (10) est également pivotant comme la porte (3).

6. Véhicule de transport public de personnes, par exemple un bus, équipé d'une installation de protection du conducteur, selon la revendication 5,
**caractérisé en ce que,**
l'élément en verre (10) peut être pivoté indépendamment de la porte (3).

7. Véhicule de transport public de personnes, par exemple un bus, équipé d'une installation de protection du conducteur, selon la revendication 5 ou 6,
**caractérisé en ce que,**
à côté de l'élément en verre (10) est prévu une section en verre (12).

8. Véhicule de transport public de personnes, par exemple un bus, équipé d'une installation de protection du conducteur, selon la revendication 7,
**caractérisé en ce que,**
la section en verre (12) est mobile par rapport à l'élément en verre (10), en particulier coulissant.

9. Véhicule de transport public de personnes, par exemple un bus, équipé d'une installation de protection du conducteur, selon la revendication 7 ou 8,
**caractérisé en ce que,**
la section en verre (12) est montée coulissante par rapport à l'élément en verre (10) sur l'élément en verre (10).

10. Véhicule de transport public de personnes, par exemple un bus, équipé d'une installation de protection du conducteur, selon la revendication 8 ou 9,
**caractérisé en ce que,**
la section en verre (12) est montée coulissante par rapport à l'élément en verre (10) de manière à coulisser à travers la porte (3).

11. Véhicule de transport public de personnes, par exemple un bus, équipé d'une installation de protection du conducteur, selon une des revendications 5 à 10,
**caractérisé en ce que,**
l'élément en verre (10) est monté au moyen d'un élément de charnière (4) sur la paroi arrière fixe (2).

12. Véhicule de transport public de personnes, par exemple un bus, équipé d'une installation de protection du conducteur, selon une des revendications 5 à 11,
**caractérisé en ce que,**
l'élément en verre (10) est lié à la porte (3).

13. Véhicule de transport public de personnes, par exemple un bus, équipé d'une installation de protection du conducteur, selon la revendication 9,
**caractérisé en ce que,**
la section en verre (12) est lié de manière coulissante avec l'élément en verre (10) dans la direction de la largeur de la porte (3).

14. Véhicule de transport public de personnes, par exemple un bus, équipé d'une installation de protection du conducteur, selon une des revendications 7 à 13,
**caractérisé en ce que,**
la section en verre (12) présente un écart par rapport au rebord supérieur de la porte (3) dans la direction verticale, en vue de la création d'un espace libre (17).

15. Véhicule de transport public de personnes, par exemple un bus, équipé d'une installation de protection du conducteur, selon une des revendications 7 à 14,
**caractérisé en ce que,**
la section en verre (12) peut être bloquée dans sa position étendue par rapport à l'élément en verre (10).

16. Véhicule de transport public de personnes, par exemple un bus, équipé d'une installation de protection du conducteur, selon une des revendications 7 à 15,
**caractérisé en ce que,**
l'installation de protection du conducteur comporte un élément de fermeture en verre (31) articulé de façon rigide par rapport au véhicule, qui, dans la position étendue de la section en verre (12), est couplé à cette section en verre (12).

17. Véhicule de transport public de personnes, par exemple un bus, équipé d'une installation de protection du conducteur, selon la revendication 16,
**caractérisé en ce que,**
l'élément de fermeture en verre (31) est solidaire du pare-brise (30) du véhicule.

18. Véhicule de transport public de personnes, par exemple un bus, équipé d'une installation de protection du conducteur, selon les revendications 16 ou 17,
**caractérisé en ce que,**
l'élément de fermeture en verre (31) est solidaire du tableau de bord (5) du véhicule.

19. Véhicule de transport public de personnes, par exemple un bus, équipé d'une installation de protection du conducteur, selon la revendication 5,
**caractérisé en ce que,**
l'élément en verre (10) est agencé pour être pivoté autour d'un axe horizontal (37) parallèlement à la porte (3), dans lequel l'axe horizontal (37) est lié à la porte.
